# EUROPEAN PATENT APPLICATION

(11) **EP 3 513 648 A1**
(43) Date of publication of application: **24.07.2019**
(21) Application number: 18152540.3
(22) Date of filing: 19.01.2018
(51) Int. Cl.: A01G 7/04, A01G 9/14

(54) **METHOD FOR INCREASING ANTIOXIDANT CONTENT IN PLANTS**

(71) Applicant: Wu, Yen-Dong, 704 Tainan City 704 (TW)
(72) Inventor: Wu, Yen-Dong, 704 Tainan City 704 (TW)
(74) Representative: Ter Meer Steinmeister & Partner

(57) **Abstract**

A method for increasing antioxidant content in plants (50), which includes: (a) placing at least one light transmissive material (30) for adjusting or retaining light transmittance at certain wavelengths between a light source (10) and photosynthesis receptors of the plants (50); and (b) passing a light emitted from the light source (10) through the light transmissive material (30), wherein the light transmissive material (30) adjusts or retains at least two of the following wavelength sections: the light transmittance at a section from 340 nm to 500 nm is 65% or less; the light transmittance at a section from 500 nm to 600 nm is 60% or less; and the light transmittance at a section from 600 nm to 850 nm is 83% or less.

## Description

### [FIELD OF THE INVENTION]

The present invention relates to a method for increasing antioxidant content in plants.

### [BACKGROUND OF THE INVENTION]

Photosynthesis is a process by which plants, algae and some bacteria convert carbon dioxide, water or hydrogen sulfide into carbohydrates under the radiation from the sun. Photosynthesis can be categorized into oxygenic photosynthesis and anoxygenic photosynthesis. Plants are known as producers of food chains because they are capable of producing organic substances from inorganic substances and storing energy through photosynthesis. The energy conversion efficiency of the plant is about 6%. Through the food chains, consumers can absorb the energy stored in plants, in which the efficiency of absorption is about 10%. To most creatures, this process is the key to their survival. In the carbon-oxygen cycle of the earth, photosynthesis is one of the most important mechanisms.

Greenhouse cultivation has begun to use light emitting diodes (LEDs) to assist or to replace natural light sources. The key of using LEDs in horticulture lies on the absorption spectrum of chlorophylls. Researchers have discovered that the absorption peaks of chlorophylls are in the red light and blue light regions, while the absorption of green light is very minimal. The absorption peaks of the chlorophyll absorption spectrum are in the blue light region in the wavelength range of 400 to 500 nanometers (nm) and in the red light region in the wavelength rage of 600 to 700 nm. Currently, artificial light sources used by most planting factories are still narrow-spectrum light sources, lighting devices designed to emit deep blue light at 455 nm and dark red light at 660 nm, and LED chips having mixed emission peaks in the blue light and red light regions, respectively. In fact, most of the solid-state lighting products optimized specifically for horticultural applications are in the research and development stage. High efficiency blue light LEDs have been in existence for a substantially long period of time, and the efficiency of red light LEDs generally needs to be further improved, particularly those LEDs that emit at ideal wavelength at 660 nm and 730 nm.

The relationship between the light quality and plant development is shown in "Photo morphogenesis in Plant" of G. H. M. Kronenberg (1986, Martinus Nijhoff Publishers). The impacts of different spectrum ranges on plant physiology are shown in Table 1.

**Table 1. Impacts of different spectrum ranges on plant physiology**

| **Spectrum ranges** | **Impacts on plant physiology** |
|---|---|
| 280 to 315 nm | Having the minimal impacts on the morphological and physiological processes |
| 315 to 400 nm | Chlorophyll absorbs less, having the impacts on the photoperiod effect and prevents stems elongation |
| 400 to 520 nm | Chlorophyll and carotenoids have the largest absorbing proportion, having the greatest impacts on photosynthesis |
| 520 to 610 nm | The absorption rate is not high for the pigments |
| 610 to 720 nm | The absorption rate is low for Chlorophyll, having significant impact on photosynthesis and photoperiod effects |
| 720 to 1000 nm | The absorption rate is low, stimulating cells elongation, affecting flowering and seed germination |
| 1000 nm | Converting into heat |

It is generally known that the colors of light have different impacts on photosynthesis. However, in fact, the effectiveness of the colors of light has no difference in photosynthesis. Using full spectrum of light is the most beneficial for plant development (Harry Stijger, Flower Tech, 2004 7 (2)). The plants have the maximum sensitive spectrum region for light at 400 to 700 nm, this region is generally referred to as photosynthetic active radiation region. About 45% of the solar energy is in this region, so the light spectrum distribution for the plant growth should near this region.

The photon energy emitted by the light is different due to different wavelengths. For example, the energy for wavelength of 400 to 500 nm (blue light) is 1.75 times of that for wavelength of 600 to 700 nm (red light). However, as for photosynthesis, the impacts of these two wavelengths are the same, the excessive energy of the green spectrum that cannot be used for photosynthesis is converted into heat. In other words, the rate of photosynthesis is determined by the photon number in 400 to 700 nm that can be absorbed by the plant and is not related to the photon number sent from each spectrum. The plants have different sensitivities to all spectra; it is because of the special absorption properties of the pigments in leaves. Chlorophyll is the most common pigment in plants, but it is not the only useful pigment for photosynthesis, other pigments also participate in photosynthesis. Hence, for considering the efficiency of photosynthesis, the absorption spectrum of Chlorophyll is not the only factor to concern with. For the morphogenesis of plants and the color of leaves, plants should receive a balanced variety of light. Blue light (400 to 500 nm) is very important for plant differentiation and stomatal regulation. If the blue light is insufficient and the ratio of the far-red light is in excess, the stems will overgrow and likely to cause leaf yellowing. When the ratio of red spectrum (655 to 665 nm) and far-red spectrum (725 to 735 nm) R/FR is between 1.0 and 1.2, the plants grow normally, but the sensitivities for spectrum ratio for different plant are different.

WO2014/015020 discloses a method for promoting plant growth and a device and method for calculating the cumulative quantity of light, which uses a light transmissive material for adjusting or retaining wavelengths below 500 nm (section A), between 500 and 630 nm (section B), and above 630 nm (section C) placed between a light source and a photosynthesis receptor of the plant to promote plant growth and plant size. However, it is unknown whether the amount of substances contained in the plant is affected when the plant is exposed to irradiation of different wavelengths.

### [DETAIL DESCRIPTION OF THE INVENTION]

The term "a," "an," or "one" as used herein is used to describe an element or an ingredient of the present invention. The term is used only to conveniently describe or provide the basic concept of the present invention. The description can be interpreted as including one or at least one, and represents singular as well as plural forms unless the context clearly dictates otherwise. When the term "one" is used in conjunction with the term "comprising" in claims, the term "one" means one or more than one.

The term "or" as used herein is equivalent to the meaning of "and/or".

The present invention relates to a method for increasing antioxidant content in plants, which comprises placing at least one light transmissive material for adjusting and retaining light transmittance at certain wavelengths between a light source and photosynthesis receptors of the plants; and (b) passing a light emitted from the light source through the light transmissive material, wherein the light transmissive material adjusts at least two of the following three wavelength sections: the light transmittance at the section from 340 nm to 500 nm is 65% or less; the light transmittance at the section from 500 nm to 600 nm is 60% or less; and the light transmittance at the section from 600 nm to 850 nm is 83% or less.

The term "wavelength" as used herein refers to the wavelength of the light. In a preferred embodiment, the wavelength refers to the wavelength of the light emitted from a light source.

In another embodiment, the light source includes, but is not limited to, a natural light source and an artificial light source. In a preferred embodiment, the natural light source comprises the sun. In another embodiment, the artificial light source comprises a LED light.

The term "light transmittance" as used herein refers to the ratio of the illuminance or photon flux density before and after the light emitted from a light source passes through the light transmissive material; for example, "incident light" is the light before it passes through a medium (for example, the light transmissive material of the present invention), "transmission light" is the light after it passes through the medium. The light transmittance is determined by dividing the illuminance of the transmission light by the illuminance of the incident light, and then multiplying by 100%.

The light transmissive material of the present invention can be any type of weaving net fabrics (including non-woven fabrics), plain nets (fabrics), plastic films (fabrics or paper), plastic boards, glass, sunscreen paints (including water-base and oil-base), and other synthetic materials, the light transmittance at each section of wavelengths emitted by the sunlight are respectively shown as follows:
the light transmittance at the section below 400 nm is 62% or less;
the light transmittance at the section from 400 nm to 500 nm is 65% or less;
the light transmittance at the section from 500 nm to 600 nm is 55% or less;
the light transmittance at the section from 600 nm to 700 nm is 80% or less;
the light transmittance of the section from 700 nm to 800 nm is 83% or less;
the light transmittance at the section above 800 nm is 83% or less;
the light transmittance at the section from 340 nm to 850 nm is 75% or less; and/or
the light transmittance at the section from 400 nm to 700 nm is 68% or less.

When three sections of wavelengths are represented as independent variables x, y and z, the light transmittance x% at the section from 340 nm to 500 nm is 65% or less; the light transmittance y% at the section from 500 nm to 600 nm is 60% or less; and the light transmittance z% at the section from 600 nm to 850 nm is 83% or less, and the amount of antioxidants produced in the plants is increased when the light transmittance of at least two of these three sections of wavelengths meet the above described conditions. One of ordinary skill in the art can shield the plants repeatedly with single layer or multiple layers (at least two layers) of light transmissive material providing light transmittance ranges that are slightly different from the above described light transmittance ranges to achieve the effect of adjusting at least two wavelength sections to be lower than the above described light transmittance ranges. Therefore, the method of the present invention can shield the plants with various combinations of single layer or multiple layers (at least two layers) of light transmissive material to achieve the effect of adjusting at least two of the following three wavelength sections: the light transmittance of the section from 340 nm to 500 nm is 65% or less; the light transmittance of the section from 500 nm to 600 nm is 60% or less; and the light transmittance of the section from 600 nm to 850 nm is 83% or less.

When plants are planted within this light transmittance, the quality of the plants will be improved, regardless of whether the produces are from the nutritional growth stage or the reproduction growth stage of the plants. The improved quality not only includes the quality of taste, flavor, sweetness, but also the ingredients that are relatively beneficial to human health, such as whitening substances and antioxidants (including, but not limited to, ascorbic acid, anthocyanins, polyphenol compounds, various vitamins and ellagic acid) and other beneficial ingredients.

Since it is well known that anti-oxidizing mechanisms are closely related to anti-aging mechanisms, the term "anti-oxidizing substances" used herein may also refer to "anti-aging substances," i.e., these substances have anti-oxidizing/anti-aging effects.

The photosynthesis receptors of the present invention refer to chlorophylls a, chlorophylls b, chlorophylls f or carotenoids, phytochromes or other plant receptors.

The method of the present invention controls the colors and the ratio of each color of the light transmissive material to adjust or retain the light transmittance of each section of wavelengths. In a preferred embodiment, the colors of the light transmissive material include, but are not limited to, magenta, dark blue, royal blue, blue, red purple, dark purple, or any combinations thereof. Therefore, the light transmissive material is of one single color or of various colors having more than two colors, wherein in the various colors having more than two colors, the ratio of each different color is adjusted/controlled so as to achieve the effect of adjusting or retaining the light transmittance of each section of wavelengths.

The light transmissive material includes, but is not limited to, a fabric, a weaving net, a gauze, a woven fabric, a plastic fabric, a plastic paper, a plastic film, a plastic board, a thermal insulation paper, glass, a sunscreen paint (including water-base and oil-base) or a non-woven fabric. In a preferred embodiment, the light transmissive material refers to a plastic film, a plastic board, glass, a sunscreen paint or a weaving net. The light transmissive material includes, but is not limited to, a magenta, dark blue, royal blue, blue, red purple, or dark purple plastic film or weaving net, in a preferred embodiment, the light transmissive material is a magenta net having a stitch density of 45% or more.

When the light transmissive material of the present invention is a fabric material (e.g., a weaving net, a woven fabric, a plastic fabric or a non-woven fabric), the stitch density thereof will affect the light transmittance, the stitch density includes, but is not limited to, between 10% and 90%; in a preferred embodiment, the stitch density of the light transmissive material is between 45% and 90%.

When the light transmissive material of the present invention is a plastic film, a plastic board, glass, or a sunscreen paint (including water-base and oil-base), the color density thereof will affect the light transmittance, the color density includes, but is not limited to, between 10% and 90%; in a preferred embodiment, the color density of the light transmissive material is between 45% and 90%.

The method of the present invention further adjusts the distance between the light transmissive material and the plants to control growth efficiency which is calibrated by the temperature, humidity, wind speed and luminosity optimal to the reaction of photosynthesis receptors of the plants.

The present invention can adjust a light according to different characteristics of the light required by each stage of plant growth by using light transmissive materials of different colors to the optimal ratio required by a specific stage so as to increase antioxidant content of the plant. The method of the present invention can be used in natural environment or artificial environment (including but not limited to greenhouses).

The method of the present invention may be used in vegetables and fruits, which include, but are not limited to, apples, grapes, various berries (strawberries, blueberries, red berries, etc.), tomatoes, Hami melons, cantaloupes, asparagus, etc., to achieve the effect of increasing antioxidant capacity and antioxidant content of these vegetables and fruits.

### [BRIEF DESCRIPTION OF THE DRAWINGS]

Figure 1 shows an embodiment of the present invention.
Figure 2 is a relational graph of a magenta net having a stitch density of 50% and the photon flux density at different wavelengths, wherein 1 represents the first test (sunlight), and 2 represents the second test (through the magenta net having a stitch density of 50%).
Figure 3 is the light transmittance of a light at each section of wavelengths when the light passes through a white net having a stitch density of 50%, a magenta net having a stitch density of 55%, and a magenta net having a stitch density more than 55%.

### [EXAMPLES]

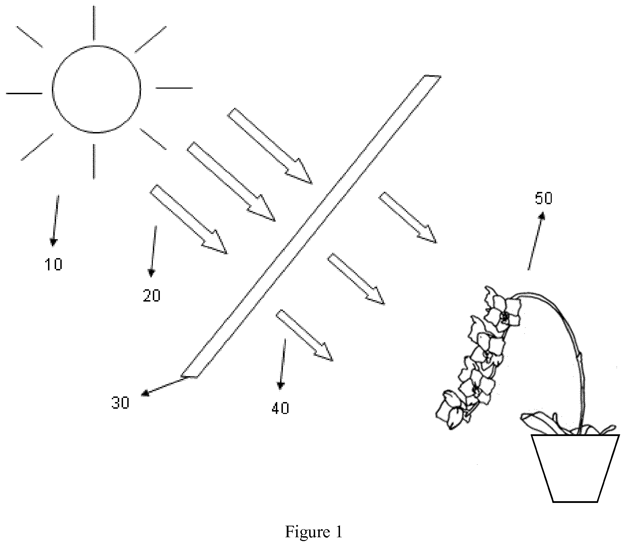

As shown in Figure 1, light source 10 was placed in front of the leaves of a plant or other photosynthesis receptors and illuminated the plant. The wavelength of light 20 that had not yet passed through the light transmissive material was filtered by a magenta, royal blue, blue or dark blue plastic film or weaving net of the light transmissive material 30. The light 40 that had passed through the light transmissive material and illuminated the plant 50 was adjusted or retained for a proper spectrum range in order to promote antioxidant content in the plant.

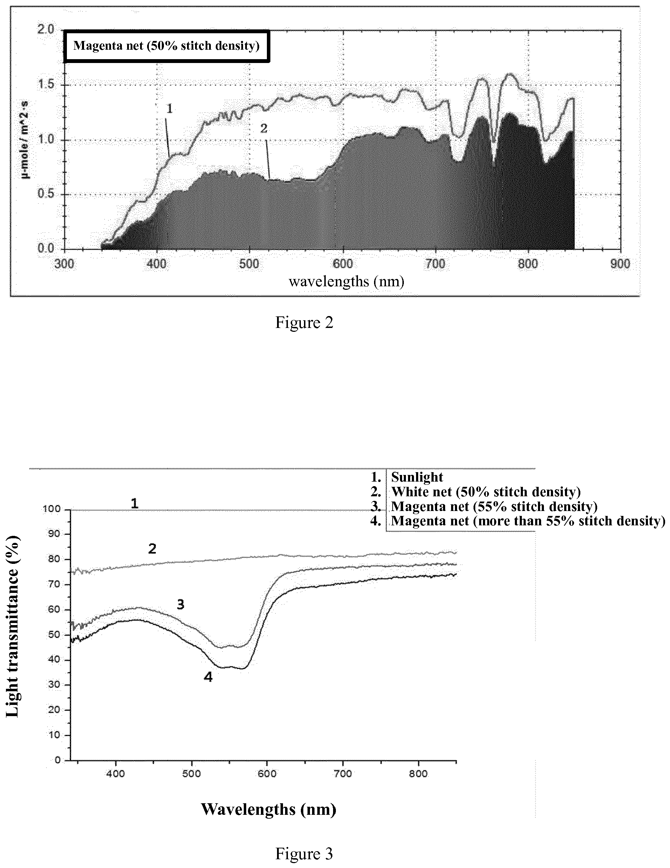

Figure 2 was a relational graph of a magenta net having a stitch density of 50% and the photon flux density at different wavelengths, wherein 1 represented the first test (sunlight), and 2 represented the second test (through the magenta net having a stitch density of 50%).

Analysis of antioxidant capacity and active ingredients

Under light irradiation, papaya plants were placed under a white, transparent net having a stitch density of 50%, a magenta net having a stitch density of 55%, and a magenta net having a stitch density of 55% or more. After the light passed through those three weaving nets, the light transmittance of each section of wavelengths was shown in Figure 3.

In addition, the present invention further placed papaya plants under a white, transparent net having a stitch density of 50% and a magenta net having a stitch density of 45%. After the light passed through these nets, the light transmittance of each section of wavelengths was shown in Table 2.

**Table 2. Light transmittance of each section of wavelengths after the light passed through a white net having a stitch density of 50% and a magenta net having a stitch density of 45%**

| | Sunlight | White net (Stitch density 50%) | magenta net (Stitch density 45%) |
|---|---|---|---|
| Below 400nm | 100 | 76 | 62 |
| 400 nm to 500 nm | 100 | 78 | 65 |
| 500 nm to 600 nm | 100 | 80 | 55 |
| 600 nm to 700 nm | 100 | 81 | 80 |
| 700 nm to 800 nm | 100 | 82 | 83 |
| Above 800 nm | 100 | 83 | 83 |
| 340 nm to 850 nm | 100 | 80 | 75 |
| 400 nm to 700 nm | 100 | 80 | 68 |

The present invention further analyzed the effects of different light transmissive materials on antioxidant capacity and antioxidant production:

### (1) Analysis experiment of strawberry fruit

Under light irradiation, strawberry plants were placed under the control group (a white, transparent net having a stitch density of 50%), treatment 1 (a magenta net having a stitch density more than 55%), and treatment 2 (a magenta net having a stitch density of 55%). After the light passed through those three weaving nets, the antioxidant capacity and the antioxidant content of the strawberry fruit were analyzed, the results are shown in Figure 3.

**Table 3. Impacts of different light transmissive materials on antioxidant capacity and antioxidant content of strawberry fruit**

| Sample No. | Sample Groups | ABTS+ Clearance rate (%) | Polyphenol compounds (mg of GAE/g) | Ascorbic acid (mg/g) | Ellagic acid (mg/g) | Anthocyanin (mg/g) |
|---|---|---|---|---|---|---|
| 1 | Control | 20.30±1.96 | 1.85±0.04 | 0.40±0.0031 | <0.00625 | 0.97±0.0014 |
| 2 | Treatment 1 | 62.68±4.57 | 5.28±0.04 | 0.58±0.0016 | <0.00625 | 1.61±0.0054 |
| 3 | Treatment 2 | 27.60±2.87 | 2.17±0.04 | 0.56±0.0005 | <0.00625 | 0.99±0.0027 |

Therefore, as for the antioxidant index of strawberry fruit ABTS + clearance rate, the clearance rate of the samples in treatment 1 was the highest, up to 62.68 ± 4.57%. As for the results of the polyphenol compounds, the content of the samples in treatment 1 was the highest, the concentration was 5.28 ± 0.04 mg of GAE/g, while the concentration of ellagic acid was <0.00625 mg/g. The ascorbic acid content fell between 0.40 mg/g and 0.58 mg/g, among them the control group was the lowest, the concentration was 0.40 ± 0.0031 mg/g. The anthocyanin content in treatment 1 was the highest, the concentration was 1.61 ± 0.0054 mg/g. The results showed that the weaving nets of treatment 1 and treatment 2 were able to improve the antioxidant capacity and increase the antioxidant content of strawberry fruit.

### (2) Analysis experiment of papaya fruit (A)

Under light irradiation, papaya plants (A) were placed under the control group (a white, transparent net having a stitch density of 50%), treatment 1 (a magenta net having a stitch density of more than 50%), and treatment 2 (a magenta net having a stitch density of 50%). After the light passed through these three weaving nets, the antioxidant capacity and the content of antioxidant of the papaya fruit (A) were analyzed, the results are shown in Table 4.

**Table 4. Impacts of different light transmissive materials on antioxidant capacity and antioxidant content of papaya fruit (A)**

| Sample No. | Sample Groups | ABTS+ Clearance rate (%) | Polyphenol compound (mg of GAE/g) | Ascorbic acid (mg/g) | Ellagic acid (mg/g) | Anthocyanin( mg/g) |
|---|---|---|---|---|---|---|
| 1 | Control | 18.30±1.96 | 1.45±0.04 | 0.30±0.0031 | <0.00625 | 0.921±0.0014 |
| 2 | Treatment 1 | 45.20±3.52 | 3.19±0.04 | 0.43±0.0014 | <0.00625 | 1.501±0.0042 |
| 3 | Treatment 2 | 20.60±2.66 | 1.68±0.04 | 0.35±0.0005 | <0.00625 | 0.934±0.0022 |

Therefore, as for the antioxidant index of papaya fruit (A) ABTS + clearance rate, the clearance rate of the samples in treatment 1 was the highest, up to 45.20 ± 3.52%. As for the results of the polyphenol compounds, the content of the samples in treatment 1 was the highest, the concentration was 3.19 ± 0.04 mg of GAE/g, while the concentration of ellagic acid in every groups were <0.00625 mg/g. The ascorbic acid content fell between 0.30 mg/g and 0.43 mg/g, among them the control group was the lowest, the concentration was 0.30 ± 0.0031 mg/g. The anthocyanin content in treatment 1 was the highest, the concentration was 1.501 ± 0.0042 mg/g. The results showed that the weaving nets of both treatment 1 and treatment 2 were able to improve the antioxidant capacity and increase the antioxidant content of papaya fruit (A).

### (3) Analysis experiment of papaya fruit (B)

Under light irradiation, papaya plants (B) were placed under the control group (a white, transparent net having a stitch density of 50%), treatment 1 (a magenta net having a stitch density of more than 50%), and treatment 2 (a magenta net having a stitch density of 50%). After the light passed through these three weaving nets, the antioxidant capacity and the content of antioxidant of the papaya fruit (B) were analyzed, the results are shown in Table 5.

Table 5. Impacts of different light transmissive materials on antioxidant capacity and antioxidant content of papaya fruit (B)

| Sample No. | Sample Groups | ABTS+ Clearance rate (%) | Polyphenol compound (mg of GAE/g) | Ascorbic acid (mg/g) | Ellagic acid (mg/g) | Anthocyanin( mg/g) |
|---|---|---|---|---|---|---|
| 1 | Control | 16.10±1.84 | 1.33±0.04 | 0.31±0.0033 | <0.00625 | 0.910±0.0016 |
| 2 | Treatment 1 | 37.70±3.25 | 3.19±0.04 | 0.45±0.0016 | <0.00625 | 1.500±0.0042 |
| 3 | Treatment 2 | 18.10±1.96 | 1.45±0.04 | 0.33±0.0006 | <0.00625 | 0.923±0.0025 |

Therefore, as for the antioxidant index of papaya fruit (B) ABTS + clearance rate, the clearance rate of the samples in treatment 1 was the highest, up to 37.70 ± 3.25%. As for the results of the polyphenol compounds, the content of the samples in treatment 1 was the highest, the concentration was 3.19 ± 0.04 mg of GAE/g, while the concentration of ellagic acid in every groups were <0.00625 mg/g. The ascorbic acid content fell between 0.31 mg/g and 0.45 mg/g, among them the control group was the lowest, the concentration was 0.31 ± 0.0033 mg/g. The anthocyanin content in treatment 1 was the highest, the concentration was 1.500 ± 0.0042 mg/g. The results showed that the weaving nets of both treatment 1 and treatment 2 were able to improve the antioxidant capacity and increase the antioxidant content of papaya fruit (B).

Therefore, when the light transmissive material of the present invention was used in strawberry and papaya, the effects of improving the antioxidant capacity and increasing the production of antioxidants could be achieved.

The above description is representative of preferred embodiments, exemplary, and not intended as limitations on the scope of the invention. It will be readily apparent to a person skilled in the art that varying substitutions and modifications may be made to the invention disclosed herein without departing from the scope and spirit of the invention.

## Claims

1. A method for increasing antioxidant content in plants, which comprises: (a) placing at least one light transmissive material for adjusting or retaining light transmittance at certain wavelengths between a light source and photosynthesis receptors of the plants; and (b) passing a light emitted from the light source through the light transmissive material, wherein the light transmissive material adjusts or retains at least two of the following wavelength sections: the light transmittance at the section from 340 nm to 500 nm is 65% or less; the light transmittance at the section from 500 nm to 600 nm is 60% or less; and the light transmittance at the section from 600 nm to 850 nm is 83% or less.

2. The method of claim 1, wherein the antioxidant is ascorbic acid, various vitamins, anthocyanin, ellagic acid, or polyphenol compounds.

3. The method of claim 1, which adjusts at least two of the following wavelength sections by using a combination of single layer or multiple layers of light transmissive material to shield the plants: the light transmittance at the section from 340 nm to 500 nm is 65% or less; the light transmittance at the section from 500 nm to 600 nm is 60% or less; and the light transmittance at the section from 600 nm to 850 nm is 83% or less.

4. The method of claim 1, which adjusts at least two of the following wavelength sections by controlling the color of the light transmissive material to shield the plants: the light transmittance at the section from 340 nm to 500 nm is 65% or less; the light transmittance at the section from 500 nm to 600 nm is 60% or less; and the light transmittance at the section from 600 nm to 850 nm is 83% or less.

5. The method of claim 1, wherein the light transmissive material is a fabric, a weaving net, a gauze, a woven fabric, a plastic fabric, a plastic film, a plastic paper, a plastic board, a thermal insulation paper, glass, a sunscreen paint or a non-woven fabric.

6. The method of claim 4, wherein the light transmissive material is a magenta, royal blue, blue, red purple, or dark purple plastic film or weaving net.

7. The method of claim 1, wherein the light transmissive material is a magenta net having a stitch density of 45% or more.

8. The method of claim 1, which is used in natural environment or greenhouses.

## Amended claims

### Amended claims in accordance with Rule 137(2) EPC.

1. A method for increasing antioxidant content in plants, which comprises: (a) placing at least one light transmissive material for adjusting or retaining light transmittance at certain wavelengths between a light source and photosynthesis receptors of the plants; and (b) passing a light emitted from the light source through the light transmissive material, wherein the light transmissive material adjusts or retains at least two of the following wavelength sections: the light transmittance at the section from 340 nm to 500 nm is 65% or less; the light transmittance at the section from 500 nm to 600 nm is 60% or less; and the light transmittance at the section from 600 nm to 850 nm is 83% or less.

2. The method of claim 1, wherein the antioxidant is ascorbic acid, various vitamins, anthocyanin, ellagic acid, or polyphenol compounds.

3. The method of claim 1, which adjusts at least two of the following wavelength sections by using a combination of single layer or multiple layers of light transmissive material to shield the plants: the light transmittance at the section from 340 nm to 500 nm is 65% or less; the light transmittance at the section from 500 nm to 600 nm is 60% or less; and the light transmittance at the section from 600 nm to 850 nm is 83% or less.

4. The method of claim 1, which adjusts at least two of the following wavelength sections by controlling the color of the light transmissive material to shield the plants: the light transmittance at the section from 340 nm to 500 nm is 65% or less; the light transmittance at the section from 500 nm to 600 nm is 60% or less; and the light transmittance at the section from 600 nm to 850 nm is 83% or less.

5. The method of claim 1, wherein the light transmissive material is a fabric, a weaving net, a gauze, a woven fabric, a plastic fabric, a plastic film, a plastic paper, a plastic board, a thermal insulation paper, glass, a sunscreen paint or a non-woven fabric.

6. The method of claim 4, wherein the light transmissive material is a magenta, royal blue, blue, red purple, or dark purple plastic film or weaving net.

7. The method of claim 1, wherein the light transmissive material is a magenta net having a stitch density of 45% or more.

8. The method of claim 1, wherein the plants grow in natural environment or greenhouses.
